# FASCICULE DE BREVET EUROPEEN

(11) **EP 3 018 771 B1**
(45) Date de publication et mention de la délivrance du brevet: **22.01.2020**
(21) Numéro de dépôt: 15192275.4
(22) Date de dépôt: 30.10.2015
(51) Int. Cl.: H01R 31/06, H01R 13/66, B64F 1/36, H02J 4/00, H02H 9/04, H02J 7/00, H02J 7/02, H01R 27/02, B64D 45/02

(54) **ENSEMBLE COMPRENANT UN SYSTÈME DE PRISE POUR LA PROTECTION CONTRE LA FOUDRE D'UN AÉRONEF**
ANORDNUNG MIT EINEM STECKERSYSTEM FÜR DEN BLITZSCHUTZ EINES LUFTFAHRZEUGS
ASSEMBLY COMPRISING A CONNECTION SYSTEM FOR LIGHTNING PROTECTION OF AN AIRCRAFT

(30) Priorité: 04.11.2014 FR 1460634
(43) Date de publication de la demande: 11.05.2016
(73) Titulaire: Airbus Operations SAS, 31060 Toulouse (FR)
(72) Inventeur: FORGET, Frédéric, 32430 Saint Cricq (FR)
(74) Mandataire: Cabinet Le Guen Maillet

(56) Documents cités:
- EP-A1- 0 268 947
- EP-A2- 2 306 608
- FR-A1- 2 600 465
- US-A- 5 543 999
- US-B1- 7 547 997
- Unknown: "GIG400", , 30 November 2009 (2009-11-30), XP055431003, Retrieved from the Internet: URL:http://www.tda-lefebure.com/produits/g ig400/gig400_fr.pdf [retrieved on 2017-12-01]

## Description

La présente invention concerne un ensemble comportant un aéronef, un groupe électrogène, et un système de prise pour la protection contre la foudre.

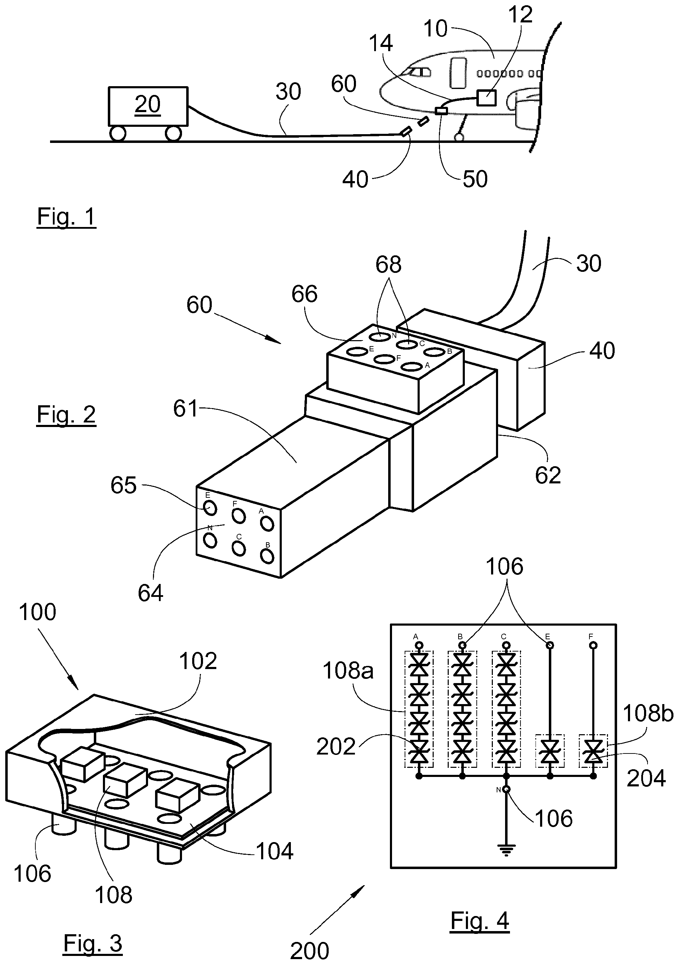

La Fig. 1 montre un aéronef 10 qui est à l'arrêt au sol. L'aéronef est alimenté en électricité par un groupe électrogène 20 à l'aide d'un câble d'alimentation 30 qui comporte plusieurs conducteurs électriques et à l'extrémité duquel est prévu un connecteur d'extrémité 40 présentant un contact électrique pour chaque conducteur électrique.

Pour permettre la connexion avec le groupe électrogène 20, l'aéronef 10 présente un connecteur de connexion 50 présentant, pour chaque conducteur électrique, un contact électrique en aval duquel est connecté un conducteur embarqué 14 dans l'aéronef 10 et auquel est connecté au moins un élément électrique 12 de l'aéronef 10.

Le branchement entre le connecteur d'extrémité 40 et le connecteur de connexion 50 s'effectue par l'intermédiaire d'une prise gigogne 60, comme celle commercialisée par la société TDA LEFEBURE sous la référence GIG 400. Une telle prise gigogne connue de l'état de l'art est décrite dans le document XP055431003.

La Fig. 2 montre un exemple d'une prise gigogne 60 comportant un châssis 61 avec un premier connecteur 62 comportant, pour chaque contact électrique du connecteur d'extrémité 40, un contact électrique qui vient se connecter électriquement avec ledit contact électrique du connecteur d'extrémité 40, et un deuxième connecteur 64 comportant, pour chaque conducteur électrique, un contact électrique 65 (ici femelle) électriquement connecté au contact électrique du premier connecteur 62 correspondant, et qui est prévu pour se connecter à un contact électrique (ici mâle) du connecteur de connexion 50.

La prise gigogne 60 permet ici la connexion de six conducteurs électriques qui sont référencés ici par les lettres A, B, C, N, E et F. Le connecteur de connexion 50 comporte alors pour chaque conducteur électrique A, B, C, N, E, F, un conducteur embarqué 14 électriquement connecté à un conducteur électrique A, B, C, N, E, F à travers le deuxième connecteur 64 et le connecteur de connexion 50.

La prise gigogne 60 présente un troisième connecteur 66 qui, pour chaque conducteur électrique, présente un contact électrique femelle 68, électriquement connecté au contact électrique du premier connecteur 62 connecté audit conducteur électrique, et permettant par exemple le branchement d'un organe de connexion d'un multimètre.

La connexion du groupe électrogène 20 à l'aéronef 10 crée une boucle.

Lorsque la foudre frappe le sol au voisinage de l'aéronef 10, une partie du champ magnétique induit par la foudre génère une chute de tension dans la boucle, créant un couplage inductif qui génère une surtension électrique dans le câble d'alimentation 30. Cette surtension électrique se propage jusqu'à l'aéronef 10 au risque de détériorer certains éléments électriques 12 de l'aéronef 10.

Un objet de la présente invention est de proposer un ensemble comportant un aéronef, un groupe électrogène, et un système de prise pour la protection contre la foudre qui ne présente pas les inconvénients de l'art antérieur et qui en particulier évite la propagation d'une surtension électrique jusqu'à l'aéronef.

A cet effet, est proposé un ensemble comportant :
- un groupe électrogène comprenant un câble d'alimentation comportant plusieurs conducteurs électriques et à l'extrémité duquel est prévu un connecteur d'extrémité présentant un contact électrique pour chaque conducteur électrique,
- un aéronef alimenté en électricité par ledit groupe électrogène à l'aide du câble d'alimentation et présentant un connecteur de connexion présentant, pour chaque conducteur électrique, un contact électrique en aval duquel est connecté un conducteur embarqué dans l'aéronef et auquel est connecté au moins un élément électrique de l'aéronef, et
- un système de prise pour la protection contre la foudre comportant :
   - une prise gigogne connectée entre le connecteur d'extrémité et le connecteur de connexion et comportant :
      - un premier connecteur connecté au connecteur d'extrémité et présentant, pour chaque contact électrique du connecteur d'extrémité, un contact électrique se connectant électriquement avec ledit contact électrique du connecteur d'extrémité,
      - un deuxième connecteur présentant, pour chaque contact électrique du premier connecteur, un contact électrique électriquement connecté audit contact électrique du premier connecteur et se connectant à un contact électrique du connecteur de connexion, et
      - un troisième connecteur présentant, pour chaque contact électrique du premier connecteur, un contact électrique femelle électriquement connecté audit contact électrique du premier connecteur,
      l'ensemble étant caractérisé en ce qu'il comporte en outre un dispositif de sécurité branché sur le troisième connecteur et comportant :
      - un boîtier en matériau électriquement isolant,
      - pour chaque contact électrique femelle, un contact électrique mâle, saillant par rapport au boîtier et prévu pour s'insérer dans ledit contact électrique femelle,
      - des moyens d'écrêtage prévus pour écrêter un signal électrique,
      - un circuit imprimé logé dans le boîtier et présentant des pistes conductrices reliant chaque contact électrique mâle à un moyen d'écrêtage.

Un tel ensemble évite ainsi la propagation d'une surtension électrique jusqu'à l'aéronef par écrêtage du signal.

Avantageusement, l'un des conducteurs est le neutre, et entre chaque contact électrique mâle correspondant à un conducteur électrique différent du neutre et le contact électrique mâle correspondant au neutre est disposé un moyen d'écrêtage.

Avantageusement, chaque moyen d'écrêtage est un ensemble d'une diode ou de plusieurs diodes montées en série entre le contact électrique mâle correspondant à chaque conducteur électrique en dehors du neutre et le contact électrique mâle correspondant au neutre.

Selon un mode de réalisation particulier, lorsque le conducteur électrique est un conducteur électrique transportant un courant basse tension de 115-200V à 400Hz, le moyen d'écrêtage est constitué de quatre diodes montées en série.

Selon un mode de réalisation particulier, lorsque le conducteur électrique est un conducteur électrique transportant un courant très basse tension de 28V et 0,5A, le moyen d'écrêtage est constitué d'une diode.

Avantageusement, pour chaque conducteur, le nombre de diodes est l'entier qui est juste supérieur au rapport entre la tension maximale circulant dans le conducteur électrique et une tension limite, correspondant à la valeur de la tension pour laquelle la diode passe d'un état bloquant à un état conducteur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 montre un aéronef au sol branché à un groupe électrogène,
la Fig. 2 montre une prise gigogne de l'état de la technique,
la Fig. 3 montre une coupe partielle d'un dispositif de sécurité selon l'invention, et
la Fig. 4 montre un schéma électrique du dispositif de sécurité selon l'invention.

La Fig. 3 montre un dispositif de sécurité 100 qui est prévu pour être mis en œuvre dans le cadre d'une prise gigogne 60 du type de celle de la Fig. 2 et dans le cadre d'une installation comme celle de la Fig. 1, avec un groupe électrogène 20 et un aéronef 10 comportant un connecteur de connexion 50 pour la protection contre la foudre de l'aéronef 10. L'installation selon l'invention présente ainsi un ensemble comportant le groupe électrogène 20, l'aéronef 10 et un système de prise tel que décrit ci-après.

L'aéronef 10 est alimenté en électricité par le groupe électrogène 20 à l'aide d'un câble d'alimentation 30 comportant plusieurs conducteurs électriques et à l'extrémité duquel est prévu un connecteur d'extrémité 40 présentant un contact électrique pour chaque conducteur électrique. L'aéronef 10 présente un connecteur de connexion 50 présentant, pour chaque conducteur électrique, un contact électrique en aval duquel est connecté un conducteur embarqué 14 dans l'aéronef 10 et auquel est connecté au moins un élément électrique 12 à protéger de l'aéronef 10.

La prise gigogne 60 comporte ainsi également un premier connecteur 62 qui pour chaque conducteur électrique issu du groupe électrogène 20 présente un contact électrique électriquement connecté audit conducteur électrique à travers un connecteur d'extrémité 40.

La prise gigogne 60 comporte ainsi également un deuxième connecteur 64 présentant, pour chaque contact électrique du premier connecteur 62, un contact électrique 65 électriquement connecté audit contact électrique du premier connecteur 62 et donc au conducteur électrique associé. Chaque contact électrique 65 est prévu pour se connecter à un contact électrique du connecteur de connexion 50, contact électrique en aval duquel est connecté un conducteur embarqué 14 connecté à des éléments électriques 12 à protéger.

La prise gigogne 60 comporte ainsi également un troisième connecteur 66 qui, pour chaque contact électrique du premier connecteur 62, présente un contact électrique femelle 68 électriquement connecté audit contact électrique du premier connecteur 62 et donc au conducteur électrique associé.

Dans le cadre de l'invention, le troisième connecteur 66 reçoit le dispositif de sécurité 100.

Bien sûr, il est possible de prévoir une prise gigogne d'un autre type où les conducteurs électriques A, B, C, E, F et N ont une implantation différente et où leur nombre est différent.

Le dispositif de sécurité 100 comporte:
- un boîtier 102 en matériau électriquement isolant,
- pour chaque contact électrique femelle 68, un contact électrique mâle 106 en matériau électriquement conducteur, saillant par rapport au boîtier 102 et prévu pour s'insérer dans ledit contact électrique femelle 68,
- des moyens d'écrêtage 108 prévus pour écrêter un signal électrique,
- un circuit imprimé 104 logé dans le boîtier 102 et présentant des pistes conductrices reliant les contacts électriques mâles 106 et les moyens d'écrêtage 108.

Ainsi, en branchant le dispositif de sécurité 100 sur le troisième connecteur 66, une surtension électrique sur l'un des conducteurs électriques est écrêtée par les moyens d'écrêtage 108 et les composants de l'aéronef 10 sont protégés.

En mode normal, les moyens d'écrêtage 108 sont transparents, par contre au-delà d'une certaine tension, les moyens d'écrêtage 108 vont écrêter le signal.

La Fig. 4 montre un schéma d'un circuit électrique 200 du circuit imprimé 104 du dispositif de sécurité 100 dans un mode de réalisation préféré.

Dans ce mode de réalisation, les premiers conducteurs électriques A, B et C sont des conducteurs électriques transportant un courant basse tension qui est préférentiellement de l'ordre de 115-200V à 400Hz, les deuxièmes conducteurs électriques E et F sont des conducteurs électriques transportant un courant très basse tension qui est préférentiellement de l'ordre de 28V et 0,5A, et le troisième conducteur électrique N est le neutre relié à la masse.

Les premiers conducteurs électriques A, B et C sont les phases.

Les deuxièmes conducteurs électriques E et F sont appelés "discrets de commande".

Entre chaque contact électrique mâle 106 correspondant à un premier conducteur électrique A, B et C ou à un deuxième conducteur électrique E et F, c'est-à-dire un conducteur électrique A, B, C, E, F différent du neutre N, et le contact électrique mâle 106 correspondant au neutre N, est disposé un moyen d'écrêtage 108a, 108b. L'écrêtage consiste ainsi, en cas de surtension électrique dans un conducteur électrique A, B, C, E, F, à mettre ce conducteur électrique au neutre qui est lui-même relié à la masse de l'aéronef 10.

Préférentiellement, chaque moyen d'écrêtage 108a, 108b est un ensemble d'une diode 204 ou de plusieurs diodes 202 montées en série entre le contact électrique mâle 106 correspondant à chaque conducteur électrique A, B, C, E, F en dehors du neutre N et le contact électrique mâle 106 correspondant au neutre N.

Dans ce mode de réalisation de l'invention, lorsque la tension dans le conducteur électrique A, B, C, E, F dépasse la tension limite (aussi appelée "tension d'inversion" ou "tension d'écrêtage" ou encore "clamping voltage" en terminologie Anglo-saxonne) de la ou des diodes 202, 204, celles-ci passent d'un état bloquant à un état conducteur et deviennent conductrices et évacuent la surtension électrique vers le neutre N qui est lui-même relié à la masse de l'aéronef 10.

Pour chaque conducteur électrique A, B, C, E, F, en dehors du neutre N, issu du groupe électrogène 20, les caractéristiques et le nombre N de diodes 202, 204 sont choisis en fonction des conditions d'utilisation du dispositif de sécurité 100.

Les caractéristiques d'une diode 202, 204 sont :
- le temps de transition entre l'état bloquant et l'état passant,
- l'intensité maximum de courant pouvant circuler dans la diode 202, 204, et
- la tension limite à partir de laquelle la diode devient conductrice (ou passante).

Les conditions d'utilisation sont :
- l'intensité du courant lors de la surtension,
- pour chaque conducteur électrique, la tension maximale circulant dans ledit conducteur électrique (avec de préférence une marge de 10 à 15% correspondant aux fluctuations classiques de la tension circulant dans un groupe électrogène 20), et
- le temps pendant lequel chaque élément électrique 12 à protéger peut accepter une surtension sans dommage.

Pour un conducteur électrique et le conducteur embarqué 14 associé, chaque diode 202, 204 est d'abord choisie de manière à ce que son temps de transition soit inférieur au temps pendant lequel l'élément électrique 12 à protéger et électriquement connecté audit conducteur embarqué 14, peut accepter une surtension sans dommage, puis parmi ces diodes 202, 204, seules les diodes 202, 204 dont l'intensité maximum de courant pouvant y circuler est supérieure à l'intensité du courant lors de la surtension sont conservées.

Pour chaque modèle de diodes 202, 204 satisfaisant ces deux critères et pour chaque conducteur électrique, le nombre N de diodes est alors l'entier qui est juste supérieur au rapport entre la tension maximale circulant dans le conducteur électrique, et la tension limite de la diode 202, 204.

Dans un souci d'optimisation, la diode 202, 204 pour laquelle N est le plus petit est choisie.

Il est également possible de prendre en compte des critères additionnels. Par exemple, les diodes 202, 204 ayant une tension résiduelle plus faible seront préférées, ou les diodes 202, 204 pouvant dissiper une puissance plus importante seront préférées.

Dans le cas des premiers conducteurs électriques A, B et C, le moyen d'écrêtage 108a est constitué de quatre diodes 202 identiques et montées en série.

Dans le cas des deuxièmes conducteurs électriques E et F, le moyen d'écrêtage 108b est constitué d'une diode 204.

Les diodes 202, 204 sont par exemple des diodes portant la référence 30KPA54CA ou 30KPA58CA du fabricant Littlefuse.

Le dispositif de sécurité 100 et la prise gigogne 60 constituent un système de prise selon l'invention et qui est connecté à la pluralité de conducteurs électriques.

Pour éviter que de l'humidité ou des poussières s'introduisent au niveau des contacts électriques femelles 68 et des contacts électriques mâles 106, le boîtier 102 est scellé sur la prise gigogne 60.

Selon un mode de réalisation particulier de l'invention, la longueur du conducteur entre le contact électrique mâle 106 correspondant au neutre N et la masse est inférieure à 0,85 m et sa résistance est inférieure à 50µΩ.

## Revendications

1. Ensemble comportant :
- un groupe électrogène (20) comprenant un câble d'alimentation (30) comportant plusieurs conducteurs électriques et à l'extrémité duquel est prévu un connecteur d'extrémité (40) présentant un contact électrique pour chaque conducteur électrique,
- un aéronef (10) alimenté en électricité par ledit groupe électrogène (20) à l'aide du câble d'alimentation (30) et présentant un connecteur de connexion (50) présentant, pour chaque conducteur électrique, un contact électrique en aval duquel est connecté un conducteur embarqué (14) dans l'aéronef (10) et auquel est connecté au moins un élément électrique (12) de l'aéronef (10), et
- un système de prise pour la protection contre la foudre comportant :
- une prise gigogne (60) connectée entre le connecteur d'extrémité (40) et le connecteur de connexion (50) et comportant :
- un premier connecteur (62) connecté au connecteur d'extrémité (40) et présentant, pour chaque contact électrique du connecteur d'extrémité (40), un contact électrique se connectant électriquement avec ledit contact électrique du connecteur d'extrémité (40),
- un deuxième connecteur (64) présentant, pour chaque contact électrique du premier connecteur (62), un contact électrique (65) électriquement connecté audit contact électrique du premier connecteur (62) et se connectant à un contact électrique du connecteur de connexion (50), et
- un troisième connecteur (66) présentant, pour chaque contact électrique du premier connecteur (62), un contact électrique femelle (68) électriquement connecté audit contact électrique du premier connecteur (62),
l'ensemble étant **caractérisé en ce qu'**il comporte en outre un dispositif de sécurité (100) branché sur le troisième connecteur (66) et comportant :
- un boîtier (102) en matériau électriquement isolant,
- pour chaque contact électrique femelle (68), un contact électrique mâle (106), saillant par rapport au boîtier (102) et prévu pour s'insérer dans ledit contact électrique femelle (68),
- des moyens d'écrêtage (108, 108a, 108b) prévus pour écrêter un signal électrique,
- un circuit imprimé (104) logé dans le boîtier (102) et présentant des pistes conductrices reliant chaque contact électrique mâle (106) à un moyen d'écrêtage (108, 108a, 108b).

2. Ensemble selon la revendication 1, **caractérisé en ce que** l'un des conducteurs (N) est le neutre, et **en ce que** entre chaque contact électrique mâle (106) correspondant à un conducteur électrique (A, B, C, E, F) différent du neutre (N) et le contact électrique mâle (106) correspondant au neutre (N) est disposé un moyen d'écrêtage (108a, 108b).

3. Ensemble selon la revendication 2, **caractérisé en ce que** chaque moyen d'écrêtage (108a, 108b) est un ensemble d'une diode (204) ou de plusieurs diodes (202) montées en série entre le contact électrique mâle (106) correspondant à chaque conducteur électrique (A, B, C, E, F) en dehors du neutre (N) et le contact électrique mâle (106) correspondant au neutre (N).

4. Ensemble selon la revendication 3, **caractérisé en ce que** lorsque le conducteur électrique est un conducteur électrique transportant un courant basse tension de 115-200V à 400Hz, le moyen d'écrêtage (108a) est constitué de quatre diodes (202) montées en série.

5. Ensemble selon la revendication 3, **caractérisé en ce que** lorsque le conducteur électrique est un conducteur électrique transportant un courant très basse tension de 28V et 0,5A, le moyen d'écrêtage (108b) est constitué d'une diode (204).

6. Ensemble selon l'une des revendications 3 à 5, **caractérisé en ce que**, pour chaque conducteur, le nombre de diodes (202, 204) est l'entier qui est juste supérieur au rapport entre la tension maximale circulant dans le conducteur électrique et une tension limite, correspondant à la valeur de la tension pour laquelle la diode passe d'un état bloquant à un état conducteur.

## Patentansprüche

1. Einheit, die aufweist:
- ein Stromerzeugungsaggregat (20), das ein Versorgungskabel (30) enthält, das mehrere elektrische Leiter aufweist und an dessen Ende ein Endverbinder (40) vorgesehen ist, der einen elektrischen Kontakt für jeden elektrischen Leiter aufweist,
- ein Luftfahrzeug (10), das vom Stromerzeugungsaggregat (20) mit Hilfe des Versorgungskabels (30) mit Elektrizität versorgt wird und einen Anschlussverbinder (50) aufweist, der für jeden elektrischen Leiter einen elektrischen Kontakt aufweist, stromabwärts hinter dem ein bordseitiger Leiter (14) im Luftfahrzeug (10) angeschlossen ist und mit dem mindestens ein elektrisches Element (12) des Luftfahrzeugs (10) verbunden ist, und
- ein Steckersystem für den Blitzschutz, das aufweist:
- einen Zwischenstecker (60), der zwischen dem Endverbinder (40) und dem Anschlussverbinder (50) angeschlossen ist und aufweist:
- einen ersten Verbinder (62), der mit dem Endverbinder (40) verbunden ist und für jeden elektrischen Kontakt des Endverbinders (40) einen elektrischen Kontakt aufweist, der sich elektrisch mit dem elektrischen Kontakt des Endverbinders (40) verbindet,
- einen zweiten Verbinder (64), der für jeden elektrischen Kontakt des ersten Verbinders (62) einen elektrischen Kontakt (65) aufweist, der elektrisch mit dem elektrischen Kontakt des ersten Verbinders (62) verbunden ist und sich mit einem elektrischen Kontakt des Anschlussverbinders (50) verbindet, und
- einen dritten Verbinder (66), der für jeden elektrischen Kontakt des ersten Verbinders (62) einen elektrischen Buchsenkontakt (68) aufweist, der elektrisch mit dem elektrischen Kontakt des ersten Verbinders (62) verbunden ist,
wobei die Einheit **dadurch gekennzeichnet ist, dass** sie außerdem eine Sicherheitsvorrichtung (100) aufweist, die an den dritten Verbinder (66) angeschlossen ist und aufweist:
- ein Gehäuse (102) aus elektrisch isolierendem Material,
- für jeden elektrischen Buchsenkontakt (68) einen elektrischen Steckerkontakt (106), der bezüglich des Gehäuses (102) vorsteht und vorgesehen ist, sich in den elektrischen Buchsenkontakt (68) einzufügen,
- Spitzenbegrenzungseinrichtungen (108, 108a, 108b), die vorgesehen sind, um den Spitzenwert eines elektrischen Signals zu begrenzen,
- eine Leiterplatte (104), die im Gehäuse (102) untergebracht ist und Leiterbahnen aufweist, die jeden elektrischen Steckerkontakt (106) mit einer Spitzenbegrenzungseinrichtung (108, 108a, 108b) verbinden.

2. Einheit nach Anspruch 1, **dadurch gekennzeichnet, dass** einer der Leiter (N) der Neutralleiter ist, und dass zwischen jedem elektrischen Steckerkontakt (106), der einem elektrischen Verbinder (A, B, C, E, F) anders als der Neutralleiter (N) entspricht, und dem elektrischen Steckerkontakt (106), der dem Neutralleiter (N) entspricht, eine Spitzenbegrenzungseinrichtung (108a, 108b) angeordnet ist.

3. Einheit nach Anspruch 2, **dadurch gekennzeichnet, dass** jede Spitzenbegrenzungseinrichtung (108a, 108b) eine Einheit aus einer Diode (204) oder aus mehreren Dioden (202) ist, die zwischen dem elektrischen Steckerkontakt (106) entsprechend jedem elektrischen Leiter (A, B, C, E, F) außer dem Neutralleiter (N) und dem elektrischen Steckerkontakt (106) entsprechend dem Neutralleiter (N) in Reihe geschaltet sind.

4. Einheit nach Anspruch 3, **dadurch gekennzeichnet, dass**, wenn der elektrische Leiter ein elektrischer Leiter ist, der einen Niederspannungsstrom von 115-200V bei 400Hz transportiert, die Spitzenbegrenzungseinrichtung (108a) aus vier in Reihe geschalteten Dioden (202) besteht.

5. Einheit nach Anspruch 3, **dadurch gekennzeichnet, dass**, wenn der elektrische Leiter ein elektrischer Leiter ist, der einen Kleinspannungsstrom von 28V und 0,5A transportiert, die Spitzenbegrenzungseinrichtung (108b) aus einer Diode (204) besteht.

6. Einheit nach einem der Ansprüche 3 bis 5, **dadurch gekennzeichnet, dass** für jeden Leiter die Anzahl von Dioden (202, 204) die ganze Zahl ist, die direkt über dem Verhältnis zwischen der maximalen Spannung, die in dem elektrischen Leiter fließt, und einer Grenzspannung liegt, die dem Wert der Spannung entspricht, bei dem die Diode von einem Sperrzustand in einen leitenden Zustand übergeht.

## Claims

1. Set comprising:
- a generator set (20) comprising a power supply cable (30) comprising several electrical conductors and at the end of which is set an end connector (40) having an electrical contact for each electrical conductor,
- an aircraft (10) powered with electricity by means of said generator set (20) thanks to a power supply cable (30) and having a connection terminal (50) having, for each electrical conductor, an electrical contact downstream of which is connected a conductor (14) embedded in the aircraft (10) and to which is connected at least one electrical component (12) of the aircraft (10), and
- a socket system for the protection against lightening comprising:
- an extension socket (60) connected between the end connector (40) and the connection terminal (50) and comprising:
- a first connector (62) connected to the end connector (40) and having, for each electrical conductor of the end connector (40), an electrical contact electrically connecting to said electrical conductor of the end connector (40),
- a second connector (64) having, for each electrical contact of the first connector (62), an electrical contact (65) which is electrically connected to said electrical contact of the first connector (62) and connecting to an electrical contact of the connection terminal (50),
- a third connector (66) having, for each electrical contact of the first connector (62), a female electrical contact (68) electrically connected to said electrical contact of the first connector (62), and
the set being **characterized in that** it further comprises a safety device (100) connected to the third connector (66) and comprising:
- a housing (102) made of electrically insulating material;
- for each female electrical contact (68), a male electrical contact (106) projecting from the housing (102) and designed to be inserted in the said female electrical contact (68);
- clipping means (108, 108a, 108b) designed to clip an electrical signal;
- a printed circuit (104) seated inside the housing (102) and having conductive tracks connecting each male electrical contact (106) to a clipping mean (108, 108a, 108b) .

2. Set according to Claim 1, **characterized in that** one of the conductors (N) is the neutral conductor and **in that** a clipping mean (108a, 108b) is arranged between each male electrical contact (106) corresponding to an electrical conductor (A, B, C, E, F) other than neutral (N) and the male electrical contact (106) corresponding to neutral (N).

3. Set according to Claim 2, **characterized in that** each clipping mean (108a, 108b) is an assembly consisting of one diode (204) or several diodes (202) mounted in series between the male electrical contact (106) corresponding to each electrical conductor (A, B, C, E, F) other than neutral (N) and the male electrical contact (106) corresponding to neutral (N).

4. Set according to Claim 3, **characterized in that** when the electrical conductor is an electrical conductor carrying a low voltage current of 115-200V at 400Hz, the clipping mean (108a) consists in four diodes (202) mounted in series.

5. Set according to Claim 3, **characterized in that** when the electrical conductor is an electrical conductor carrying a very low voltage current of 28V and 0.5V, the clipping mean (108b) consists in one diode (204).

6. Set according to one of Claims 3 to 5, **characterized in that**, for each conductor, the number of diodes (202, 204) is the integral which is marginally greater than the ratio between the maximum voltage flowing in the electrical conductor and the limit voltage, corresponding to the voltage value at which the diode passes from a blocking state to a conducting state.
